# EUROPÄISCHE PATENTSCHRIFT

(11) **EP 1 090 288 B1**
(45) Veröffentlichungstag und Bekanntmachung des Hinweises auf die Patenterteilung: **21.05.2008**
(21) Anmeldenummer: 99955757.2
(22) Anmeldetag: 22.09.1999
(51) Int. Cl.: G01N 29/02

(54) **VERFAHREN UND VORRICHTUNG ZUM BETRIEB EINER MIKROAKUSTISCHEN SENSORANORDNUNG**
METHOD AND DEVICE FOR OPERATING A MICROACOUSTIC SENSOR ARRAY
PROCEDE ET DISPOSITIF POUR FAIRE FONCTIONNER UN SYSTEME DE DETECTION MICROACOUSTIQUE

(30) Priorität: 04.11.1998 DE 19850801
(43) Veröffentlichungstag der Anmeldung: 11.04.2001
(73) Patentinhaber: ROBERT BOSCH GMBH, 70442 Stuttgart (DE)
(72) Erfinder: WOLF, Konrad, D-75045 Walzbachtal (DE); HECHT, Hans, D-70825 Korntal-Muenchingen (DE); HERRMANN, Falk, D-71229 Leonberg (DE)
(86) Internationale Anmeldenummer: PCT/DE1999/003024
(87) Internationale Veröffentlichungsnummer: WO 2000/026659

(56) Entgegenhaltungen:
- WO-A-87/02134
- US-A- 5 051 645

## Beschreibung

### Stand der Technik

Die Erfindung betrifft ein Verfahren und eine Vorrichtung zum Betrieb einer mikroakustischen Sensoranordnung, insbesondere zur Beseitigung von verschmutzungen in der Sensoranordnung, nach dem Oberbegriff des Hauptanspruchs.

Mikroakustische Sensoranordnungen werden mit sog. akustischen SAW- oder Oberflächenwellenbauelementen (SAW = Surface Acoustic Wave) als Sensoren für verschiedenste physikalische Größen, insbesondere in Flüssigkeiten, angewandt. Einen wichtigen Bereich bildet hierbei die Messung elektrischer Größen, wie die Dielektrizitätskonstante und/oder die Leitfähigkeit, die Messung mechanischer Größen, wie z.B. die Dichte und/oder die Viskosität und die Untersuchung chemischer Eigenschaften, wie z.B. das Vorhandensein spezieller Substanzen in Flüssigkeiten.

Bei einer bekannten Sensoranordnung wird von einem Messprinzip ausgegangen, das beispielsweise in dem Aufsatz "A study of Love-wave acoustic sensors" J.Du, G.L.Hardling, P.R.Ogilvy und M.Lake in der Fachzeitschrift Sensors and Actuators A56(1996), Seiten 211 bis 219 beschrieben ist. Mit dem hier beschriebenen Messaufbau ist ein Sensor realisiert worden, bei dem mit horizontal polarisierten akustischen Scherwellen gearbeitet wird, sog. Leckwellen bzw. Surface Skimming Bulk Wave (SSB-Wellen) oder Love-Wellen. Diese akustischen Wellenmoden werden mit sogenannten, für sich auch aus dem zuvor erwähnten Stand der Technik bekannten, Interdigitaltransducern erzeugt und auch detektiert, so dass aus dem Ausbreitungsverhalten auf einer Ausbreitungs- oder Messstrecke das gewünschte Sensorsignal gewonnen werden kann.

In Abhängigkeit von dem erforderlichen Messaufbau werden unterschiedliche Materialien und Anordnungen für die Sensorelemente verwendet, z.B. ein bestimmtes Substratmaterial für die Sensorelemente, eine vorgegebene Wellenausbreitungsrichtung, eventuell auch ein spezieller Schichtaufbau auf dem Substratmaterial und eine bestimmte Anordnung der als elektro-akustische Wandler aufgebauten Sensorelemente. Hierbei treten eine oder mehrere der zuvor genannten, für sich bekannten akustischen Wellenmoden auf, die sich hinsichtlich einer möglichen Messempfindlichkeit, Ausbreitungsgeschwindigkeit, einem akustoelektrischem Koppelfaktor und einer Anfälligkeit gegenüber Quereffekten usw. unterscheiden und damit die Eignung eines speziellen Sensortyps für eine spezifische Messaufgabe bestimmen.

Bei den oben beschriebenen, aus dem Stand der Technik bekannten akustischen Wellenmoden handelt es sich, wie erwähnt, um horizontal polarisierte akustische Scherwellen, bei denen eine sich entlang der Oberfläche des Substrats, auf dem sich die elektro-akustischen Wandler befinden, ausbreitende Welle genutzt wird.

Neben der Messempfindlichkeit sind beim Einsatz von SAW-Bauelementen als Sensoren insbesondere zur Flüssigkeitsuntersuchung weitere Randbedingungen wie Verschmutzung, aggressive Medien in einer Flüssigkeit sowie Querempfindlichkeiten zu beachten. Beim Einsatz in flüssigen Medien, wie sie im Kraftfahrzeugbereich angewendet werden (z.B. Öle, Kraftstoffe, Bremsflüssigkeit usw.) oder in der Biosensorik kommt dabei der Verschmutzungsanfälligkeit eine zentrale Bedeutung zu, da eine Partikelablagerung auf der Sensoroberfläche aufgrund der Massenzunahme zu einer direkten Verfälschung des Messsignals führt. Beim praktischen Einsatz dieser Sensoren, wo häufig ein regelmäßiger Austausch des Sensorelements nicht zu tolerieren ist, besteht daher ein Hauptproblem in der Gefahr der Ablagerung von Bestandteilen der Messflüssigkeit auf der Sensor- bzw. Substratoberfläche.

In der US-A-5,051,645 wird eine Methode zur Reinigung beschrieben, die auf einer Kombination von Schwerkraft und hydrophober Oberfläche beruht. Hier wird auf ein anderes Reinigungsverfahren eingegangen. In der Schrift Grate and Frye, Acoustic Wave Sensors, Sensors Update, 1996, XP-002205093, Seiten 37 bis 83 werden SAW-Sensoren für alle möglichen Anwendungen beschrieben. Hinweise auf die Reinigung von Messstrecken werden hier nicht gegeben.

Ferner wird in der Schrift Kolomenskii Al. A. et al., Interaction of laser-generated surface acoustic pulses with fine particles: Surface cleaning and adhesion studies, Journal of applied physics, American Institute of Physics, New York, US, 1998-00-01, XP-00861775, Vol. 84, no. 5, pages 2402 - 2410 eine foto-akustische Methode beschrieben. Hier wird die Oberfläche durch gepulste Einstrahlung von Laserstrahlen gereinigt. Hinweise auf elektro-akustische Bauelemente und entsprechende Reinigungsverfahren werden hier nicht gegeben.

### Vorteile der Erfindung

Das eingangs erwähnte Verfahren zum Betrieb einer mikroakustischen Sensoranordnung, insbesondere zur Beseitigung von Verschmutzungen an der Sensoranordnung, und eine Vorrichtung zur Durchführung des Verfahrens sind gemäß der Erfindung mit den kennzeichnenden Merkmalen des Verfahrensanspruchs 1 und des Vorrichtungsanspruchs 4 in vorteilhafter Weise weitergebildet. Gemäß der Erfindung wird in vorteilhafter Weise eine Methode geschaffen mit der eine Reinigung von Sensoranordnungen der gattungsgemäßen Art während des Betriebes ohne äußere Hilfsmittel erreicht werden kann.

Die Erfindung macht sich die Eigenschaft zu Nutze, dass in vielen Substratmaterialien für die elektro-akustischen Wandler, wie z.B. in bestimmten Quarz-, Lithiumtantalat- und Lithiumniobatschnitten, die für die eingangs beschriebenen SAW-Sensoren mit akustischen Schermoden verwendet werden können, neben den Schermoden weitere akustische Wellenmoden mit überwiegend sagittaler Polarisation (beispielsweise sog. Rayleighmoden) auftreten.

Aufgrund der Teilchenbewegung dieser Wellenmoden, die senkrecht zur Substratoberfläche verlaufen, kommt es zu einer direkten Abstrahlung von Druckwellen in eine auf der Oberfläche befindliche Flüssigkeitsschicht, so dass ein Einsatz dieser Wellenmoden zwar für Sensorzwecke nicht möglich ist, jedoch für Reinigungszwecke auf der Substratoberfläche herangezogen werden kann. Die Abstrahlung von solchen Ultraschallwellen in eine Flüssigkeit bewirken an sich bekannte Transportphänomene in der Flüssigkeit, die zur beschleunigten Ablösung von an der Substratoberfläche abgelagerten Partikeln genutzt werden können.

Neben der Reinigung der Sensoroberfläche können durch die verwendeten Schallwellen auch Desorptionsprozesse von an der Sensoroberfläche adsorbierten Molekülen unterstützt werden, was insbesondere bei Chemosensoren, die meist auf einer reversiblen Adsorption chemischer Substanzen beruhen, ausgenutzt werden kann.

Oft treten diese akustischen Wellenmoden mit sagittaler Polarisation in einer gegenüber den erwähnten Schermoden für die Sensoren um 90° gedrehten Ausbreitungsrichtung auf, so dass besonders einfache Anordnungen möglich sind.

Es kann hier der Effekt ausgenutzt werden, dass sich eine Erhöhung der Frequenz der mit den sagittalen Wellenmoden erzeugten Ultraschallwelle i.d.R. positiv auf die Abtragungs- und Reinigungsprozesse auswirkt. Bei den erfindungsgemäß angewandten Mikrosensoren, mit den für sich gesehen aus dem eingangs erwähnten Stand der Technik bekannten Interdigitaltransducern als elektro-akustische wandler, können auf einfache weise Ultraschallfrequenzen von mehreren zehn bis hin zu einigen hundert Megahertz realisiert werden. Da diese Wandler direkt auf der zu reinigenden, typischerweise nur wenige mm² großen Oberfläche des Substrats aufgebracht werden können, sind die zur Erzielung eines großen Reinigungseffektes benötigten Leistungen relativ gering.

Bei einer bestimmten Ausführungsform der Sensoranordnung mit SH-APM-Sensoren (SH-APM = Shear Horizontal Acoustic Plate Modes) werden die in dünnen Platten aus geeigneten piezoelektrischen Werkstoffen ausbreitungsfähigen, horizontal polarisierten Plattenschermoden genutzt. Diese Wellenmoden können durch die auf der Plattenoberflächen aufgebrachte metallische Interdigitaltransducer angeregt werden. Es handelt sich bei diesen Wellenmoden somit um mehrfach zwischen den beiden Plattenoberflächen reflektierte Scherwellen. Beim Benetzen einer oder beider Oberflächen mit einer Messflüssigkeit kommt es zu einer viskosen Kopplung, so dass die Wellendämpfung und die Ausbreitungsgeschwindigkeit vom Dichte-Viskositäts-Produkt der Messflüssigkeit abhängen.

Diese Sensoranordnungen mit den SH-APM-Sensoren sind außerdem als gravimetrische Chemo- bzw. Biosensoren sowie unter Ausnutzung des akustoelektrischen Effekts zur Untersuchung leitfähiger Flüssigkeiten geeignet. In der Regel wird hier die den Sensorwandlern abgewandte Oberfläche des Substrats mit dem Messmedium beaufschlagt, da so die empfindlichen Sensorwandler geschützt werden. Die Reinigungswandler können somit bei dieser Ausführungsform auf der benetzten Seite des Substrats angebracht werden.

Zusammenfassend ergeben sich bei allen Ausführungsformen vorteilhafte Sensoranordnungen, die ein einfaches und zweckmäßiges Reinigungsverfahren der messempfindlichen Bereiche der Sensoranordnung erlauben. Es kann zur Erzielung eines Reinigungseffektes an der Sensoroberfläche in vorteilhafter Weise eine Integration von Reinigungswandlern zur Anregung sagittal polarisierter akustischen Oberflächenwellen in Verbindung mit Anordnungen der Sensorwandler zur Erzeugung von horizontal polarisierten akustischen Schermoden zu den Messzwecken vorgenommen werden. Die Anordnung der Reinigungswandler erfolgt bei Sensoranordnungen mit z.B. den ersten Modentypen der Love-Moden, Leaky Waves oder SSB-Wellen auf derselben Substratoberfläche wie die Sensorwandler oder bei den zweiten Modentypen der SH-APM-Sensoren auf der den Sensorwandlern gegenüberliegenden Substratoberfläche.

Auf einfache Weise kann eine Anordnung eines oder mehrerer Reinigungswandler neben den Sensorwandler oder innerhalb des Sensorelements, gegebenenfalls mit einer Schutzschicht aus haftverminderndem Material oberhalb des Sensorelements und der Reinigungswandler, hergestellt werden. Die Reinigung der Sensoroberfläche und eine Beschleunigung von Desorptionsprozessen adsorbierter Moleküle bei der Sensoranordnung kann ohne äußere mechanische Einwirkung und während des Betriebes erfolgen. Dadurch ergibt sich eine Erhöhung der Einsatzdauer und eine Langzeitstabilität sowie eine Erweiterung der Einsatzmöglichkeiten.

Es sind keine weiteren Prozessschritte zur Erzeugung der hierfür benötigten Reinigungswandler bei der Herstellung notwendig, da sie mit den Sensorwandlern in einem Prozeßschritt hergestellt werden können. Die Reinigungswandler haben eine direkte Wirkung an der Sensoroberfläche und es besteht kein oder nur ein geringfügig erhöhter Platzbedarf gegenüber herkömmlichen Sensoranordnungen.

Diese und weitere Merkmale von bevorzugten Weiterbildungen der Erfindung gehen außer aus den Ansprüchen, einschließlich der rückbezogenen Unteransprüche, auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel einer Sensoranordnung zur Ausführung des erfindungsgemäßen Verfahrens wird anhand der Zeichnung erläutert. Es zeigen:
Figur 1 beispielhaft eine schematische Ansicht einer Sensoranordnung zur Ermittlung der Dichte und der Viskosität einer durch die Sensoranordnung strömenden Flüssigkeit;
Figur 2 eine Detailansicht eines Interdigitaltransducers zur Erzeugung und Detektion akustischer Wellenmoden;
Figuren 3 und 4 jeweils eine Anordnung von Interdigitaltransducern nach der Figur 2 als Reinigungswandler zur Erzeugung von sagittal polarisierten akustischen Wellenmoden der ersten Modentypen;
Figuren 5 und 6 Schnitte der Ausführungsform nach der Figur 4 mit einer Wellenleiterschicht für die Love-Moden-Typen nach der Figur 5 und einer Schutzschicht für die Leck- oder SSBW-Moden-Typen nach der Figur 6;
Figur 7 einen Schnitt durch ein weiters Ausführungsbeispiel einer Sensoranordnung für die zweiten Modentypen, bei denen eine mehrfach reflektierte Scherwelle als Messsignal herangezogen wird;
Figur 8 ein erstes Beispiel einer Anordnung von Reinigungswandlern nach der Figur 7 und
Figur 9 ein zweites Beispiel einer Anordnung von Reinigungswandlern nach der Figur 7.

### Beschreibung der Ausführungsbeispiele

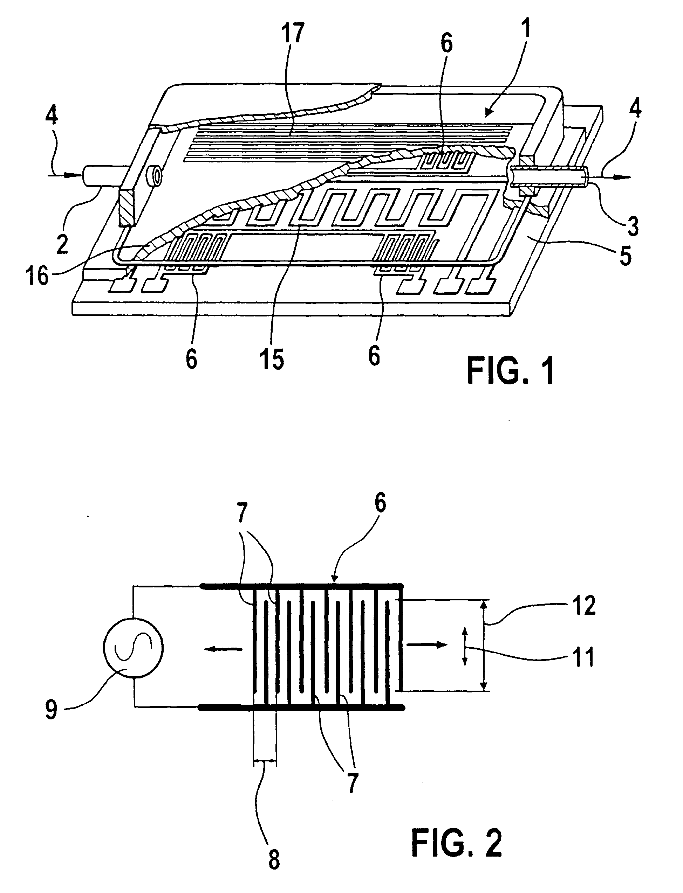

Aus Figur 1 ist eine nicht erfindungsgemäße Sensoranordnung 1 in einer aufgeschnittenen Prinzipdarstellung gezeigt, durch die eine Messflüssigkeit zur Bestimmung ihrer Dichte und ihrer Viskosität von einem Eingang 2 zu einem Ausgang 3 gemäß Pfeil 4 fließt. Hauptbestandteil der vorgeschlagenen Sensoranordnung 1 ist ein einseitig poliertes Substrat 5 aus einem piezoelektrischen Werkstoff, in dem horizontal polarisierte akustische Schermoden von Sensorgrundelementen anregbar und ausbreitungsfähig sind. Als Substratwerkstoffe sind Y-rotierte Quarzschnitte, einige Lithiumniobat- und Lithiumtantalatschnitte sowie entsprechend gepolte piezoelektrische Keramiken geeignet.

Auf der polierten Oberfläche des Substrats 5 befindet sich eine Anordnung aus metallischen Interdigitaltransducern (IDTs) 6, die anhand von Figur 2 näher erläutert werden. Diese Interdigitaltransducer 6 sind beispielsweise aus Aluminium, Titan, Chrom, Gold oder Platin, gegebenenfalls auf einer Haftschicht aus Silizium und dienen zur Anregung und Detektion der akustischen Oberflächenwellen.

Weiterhin ist beim Ausführungsbeispiel nach der Figur 1 neben oder zwischen den Grundelementen mit den IDT 6 auf der Oberfläche des Substrats 5 ein mäanderfömiger Dünnschicht-Temperaturwiderstand 15 angeordnet, da insbesondere die Viskosität stark temperaturabhängig ist und somit die Temperatur eine weitere wichtige Messgröße darstellt. Als Material für den Dünnschicht-Temperaturwiderstand 15 kommt hier in vorteilhafter Weise, das Material wie für die IDT 6 in Frage, nämlich Titan/Platin oder Titan/Platin/Titan, wobei die Haftschicht entweder Titan oder auch Silizium sein kann.

In der Figur 2 ist einer der Interdigitaltransducer 6 im Detail gezeigt, wobei Wandlerfinger 7 akustische Wellen mit der Wellenlänge 8 (Mittenfrequenz) bei einer Anregung durch eine elektrische Spannung an einem Eingang 9 erzeugen können. Hierdurch entsteht eine akustische Oberflächenwelle, d.h. insbesondere eine Scherwelle in der Polarisationsrichtung des Pfeiles 11, mit der Apertur gemäß Pfeil 12. Gemäß eines hier nicht dargestellten Ausführungsbeispiels können die Wandlerfinger 7 auch innerhalb der Periode in zwei Einzelfinger oder auch Splitfinger aufgeteilt sein, so dass λ/8 Finger entstehen. Zwischen der elektrischen und der mechanischen Periode liegt hier der Faktor zwei, so dass eine Beseitigung oder zumindest eine Verminderung innerer Reflexionen und des sog. Triple-Transit-Echos (TTE) erreichbar ist.

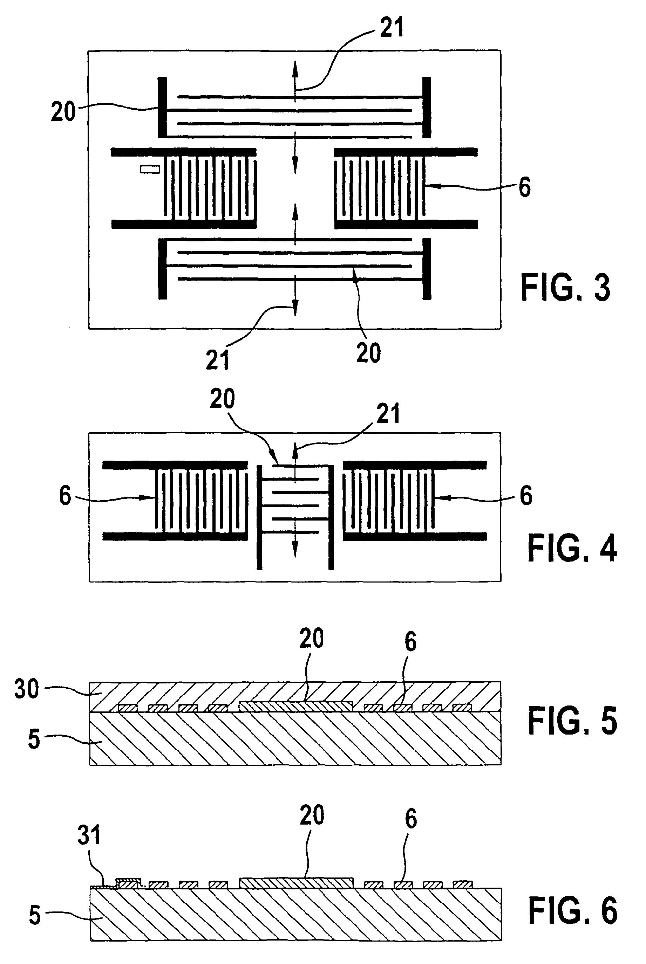

In Figur 3 ist schematisch eine erfindungsgemäße Anordnung der Interdigitaltransducern 6 als Sensorwandler gezeigt, die so auf dem Substrat 5 angeordnet sind, dass die zuvor beschriebenen, sich entlang der Oberfläche ausbreitende horizontal polarisierte Scherwellen zur Messung genutzt werden. Hier sind weitere um 90°, oder in einen anderen, der Ausbreitungsrichtung der genutzten Wellenmoden entsprechenden Winkel, gedrehte Interdigitaltransducer 20 vorhanden, die zur Anregung von sagittal polarisierten Wellenmoden in der Ausbreitungsrichtung gemäß Pfeil 21 verwendet werden und damit als Reinigungswandler wirken. Diese Reinigungswandler 20 befinden sich in derselben Maskenebene des Substrats 5 wie die als Sensorwandler wirkenden Interdigitaltransducer 6.

Es können somit, entsprechend der Figur 3, beidseitig der Sensorwandler 6 zwei über die gesamte Sensorlänge reichende Reinigungswandler 20 angeordnet sein. Die von den Wandlern 20 angeregten sagittal polarisierten akustischen Wellenmoden breiten sich an der Oberfläche entlang der Pfeile 21 aus und strahlen dabei Ultraschallenergie in die darüber befindliche Flüssigkeit ab. Das Verhältnis zwischen der Wandlerperiode der Reinigungswandler 20 und dem Abstand zwischen den beiden Reinigungswandlern 20 muss hierbei so gewählt werden, dass auf der gesamten Sensoroberfläche hinreichend Energie für einen Reinigungseffekt zur Verfügung steht.

Ein besonderer Vorteil der Anordnung nach der Figur 3 ist, dass sich keine Reinigungswandler 20 im Bereich der aktiven Sensoroberfläche mit den Sensorwandlern 6 bzw. deren Ausbreitungsstrecke befinden. Das sich ergebende Sensorelement mit den Reinigungswandlern 20 kann daher wie in der Figur 3 dargestellt als verzögerungsleitung oder auch als Resonator (hier nicht gezeigt) ausgeführt sein. Alternativ können die beiden Reinigungswandler 20 auch in hier ebenfalls nicht gezeigte mehrere kleinere Wandler, zur besseren Impedanzanpassung, aufgeteilt sein.

Bei einer zweiten, in Figur 4 dargestellten erfindungsgemäßen Ausführungsform werden ein oder mehrere Reinigungswandler 20 senkrecht zwischen den Sensorwandlern 6 direkt auf der Verzögerungsstrecke aufgebracht. Ein Vorteil dieser Anordnung sind die gegenüber der Anordnung nach der Figur 3 direktere Einwirkungen der Ultraschallwellen auf die zu reingende Oberfläche und der geringere Platzbedarf. Bei beiden Ausführungsformen nach der Figur 3 und der Figur 4 kann zur Unterstützung der Reinigungswirkung eine hier nicht dargestellte, akustisch dünne, oberhalb der Wandler 6 und 20 befindliche haftvermindernde Schicht, z.B. aus Teflon oder aus anderen chemisch inerten Werkstoffen zum Schutz der IDT 6, vorgesehen werden.

In Figur 5 ist ein Schnitt durch die Anordnung nach der Figur 4 gezeigt, bei dem für die Anwendung von Love-Moden-Wellen über den Wandlern 6 und 20 eine Wellenleiterschicht 30 angeordnet ist. Ein Schnitt nach Figur 6 zeigt eine Ausführungsform für die Anwendung mit Leckwellen (Leakywaves) oder SSBW-Wellen, bei der noch eine dünne Schutzschicht 31 über die Wandler 6 und 20 gelegt sein kann.

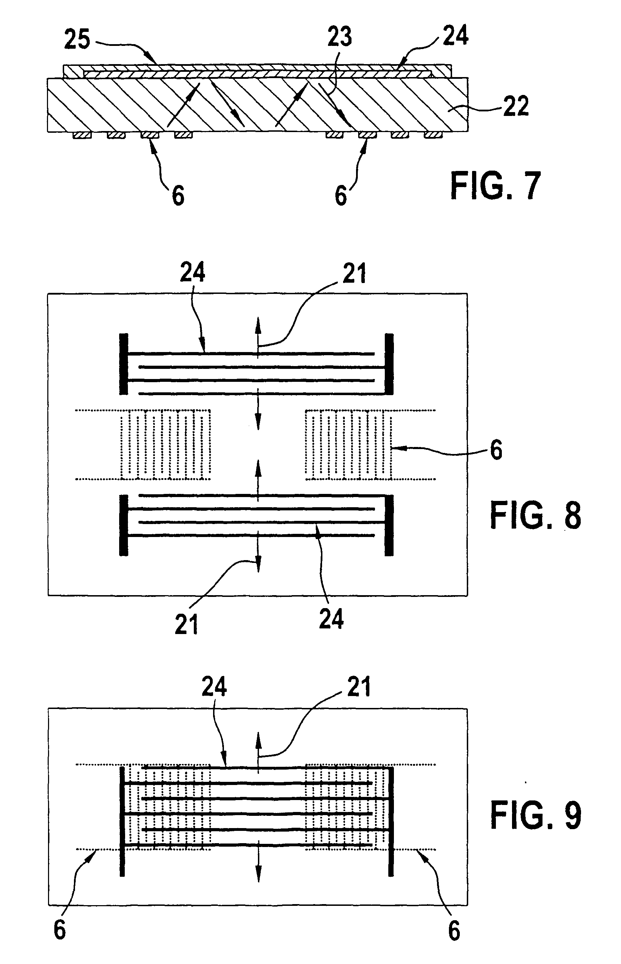

Aus Figur 7 ist ein Ausführungsbeispiel einer Sensoranordnung mit den SH-APM-Sensoren gezeigt, bei dem eine mehrfach innerhalb zwischen den zwei Oberflächen eines Substrats 22 reflektierte Scherwelle (vgl. Pfeil 23) für die Sensorwandler 6 ausgenutzt wird. Hierbei befinden sich, im Unterschied zum Ausführungsbeispiel nach der Figur 1, die Sensorwandler 6 auf der dem Messmedium abgewandten Oberfläche des Substrats 22. Um hier auf der Messoberfläche des Substrats 22 eine Reinigungswirkung zu erzielen, werden gemäß Figur 8 neben und gemäß Figur 9 auf der im Messmedium befindlichen Messstrecke ein oder mehrere Reinigungswandler 24 zur Anregung von Wellenmoden mit sagittaler Polarisation aufgebracht. Die Reinigungswandler 24 können auch hier, z.B. aus Impedanzgründen, in mehrere kleinere Wandler aufgeteilt werden. Es ist darüber hinaus auch hier möglich, oberhalb der Reinigungswandler 24 gemäß der Figur 7 eine haftvermindernde Schicht 25 oder eine Schutzschicht vorzusehen.

## Patentansprüche

1. Verfahren zum Betrieb einer mikroakustischen Sensoranordnung, bei dem
- mit mindestens einem elektro-akustischen Wandler (6) in Sensorgrundelementen akustische Oberflächenwellen mit vorgegebenen Wellenmoden erzeugt und detektiert werden und aus deren Ausbreitungsverhalten entlang einer Ausbreitungsstrecke ein Maß für die physikalischen Eigenschaften eines Messmediums ermittelt wird, **dadurch gekennzeichnet, dass** zusätzlich mindestens ein elektro-akustischer Reinigungswandler (20, 24) vorhanden ist, und dass im Bereich der Oberfläche des Sensorgrundelements, an der sich das Messmedium befindet eine sagittal polarisierte Oberflächenwelle von ihm erzeugt wird, sodass eine Reinigung stattfindet.

2. Verfahren nach Anspruch 1, **dadurch gekennzeichnet, dass**
- die sagittal polarisierte Oberflächenwelle zur Reinigung der Oberfläche, die mit dem Messmedium benetzt wird, in einem besonderen Reinigungsprozess herangezogen wird.

3. Verfahren nach Anspruch 1, **dadurch gekennzeichnet, dass**
- die sagittal polarisierte Oberflächenwelle zur Reinigung der Oberfläche, die mit dem Messmedium benetzt wird, während des Betriebs der Sensoranordnung herangezogen wird.

4. Vorrichtung zur Durchführung des Verfahrens nach einem der vorhergehenden Ansprüche wobei elektro-akustische Wandler aus auf einem Substrat (5) angeordneten lnterdigitaltransducern (6) gebildet sind, die Wandlerfinger (7) aufweisen und als elektro-akustische Wandler für die Messung Sensorwandler (6) vorhanden sind, **dadurch gekennzeichnet, dass** in oder an der Ausbreitungsstrecke der Sensorwandler (6) mindestens ein Reinigungswandler (20, 24) vorhanden ist, dessen sagittal polarisierte Wellenmoden sich zu einer ersten Ausbreitungsstrecke in einem Winkel von 90 Grad oder in einem anderen, der Ausbreitungsrichtung der Wellenmoden entsprechenden Winkel, gedreht, ausbreiten, sodass eine Reinigung stattfindet.

5. Vorrichtung nach Anspruch 4, **dadurch gekennzeichnet, dass**
- die Reinigungswandler (20) beidseitig der Ausbreitungsstrecke, die zwischen den Sensorwandlern (6) verläuft, angeordnet sind.

6. Vorrichtung nach Anspruch 4, **dadurch gekennzeichnet, dass**
- ein oder mehrere Reinigungswandler (20) in der als Verzögerungsstrecke wirkenden Ausbreitungsstrecke zwischen den Sensorwandlern (6) angeordnet sind.

7. Vorrichtung nach einem der Ansprüche 4 bis 6, **dadurch gekennzeichnet, dass**
- das Substrat (22) als Bestandteil eines SH-APM-Sensors ausgebildet ist, wobei die Sensorwandler (6) auf der dem Messmedium abgewandten Oberfläche des Substrats (22) und die Reinigungswandler (24) auf der gegenüberliegenden, von dem Messmedium benetzten Oberfläche des Substrats (22) angeordnet sind.

8. Vorrichtung nach Anspruch 7, **dadurch gekennzeichnet, dass**
- mindestens die Reinigungswandler (20; 24) mit einer für das Messmedium haftvermindernden Schicht (25) versehen sind.

9. Vorrichtung nach einem der Ansprüche 4 bis 8, **dadurch gekennzeichnet, dass**
- die Reinigungswandler (20; 24) zur Impedanzanpassung in eine Anzahl kleinerer Wandler aufgeteilt sind.

10. Vorrichtung nach einem der vorhergehenden Ansprüche, **dadurch gekennzeichnet, dass**
- auf dem Substrat (5; 22) an der dem Messmedium zugewandten Seite mindestens ein Temperatursensor aus dem gleichen Material wie die Sensor- und Reinigungswandler (6, 20; 24) angeordnet sind.

## Claims

1. Method for operating a microacoustic sensor array, in which
surface acoustic waves with predetermined wave modes are generated and detected by means of at least one electroacoustic transducer (6) in sensor base elements and a measure of the physical properties of a measurement medium is determined from their propagation behaviour along a propagation path, **characterized in that** at least one electroacoustic cleaning transducer (20, 24) is additionally present, and **in that**, in the region of that surface of the sensor base element on which the measurement medium is situated, a sagittally polarized surface wave is generated by it, such that cleaning takes place.

2. Method according to Claim 1, **characterized in that** the sagittally polarized surface wave is used for cleaning the surface wetted with the measurement medium in a special cleaning process.

3. Method according to Claim 1, **characterized in that** the sagittally polarized surface wave is used for cleaning the surface wetted with the measurement medium during the operation of the sensor array.

4. Device for carrying out the method according to any of the preceding claims, wherein electroacoustic transducers are formed from interdigital transducers (6) arranged on a substrate (5), which have transducer fingers (7), and sensor transducers (6) are present as electroacoustic transducers for the measurement, **characterized in that** there is present in or on the propagation path of the sensor transducers (6) at least one cleaning transducer (20, 24), the sagittally polarized wave modes of which propagate in a manner rotated at an angle of 90 degrees, or at another angle corresponding to the propagation direction of the wave modes, with respect to a first propagation path, such that cleaning takes place.

5. Device according to Claim 4, **characterized in that** the cleaning transducers (20) are arranged on both sides of the propagation path running between the sensor transducers (6).

6. Device according to Claim 4, **characterized in that** one or a plurality of cleaning transducers (20) are arranged in the propagation path acting as a delay path between the sensor transducers (6).

7. Device according to any of Claims 4 to 6, **characterized in that**
the substrate (22) is formed as a component part of an SH-APM sensor, wherein the sensor transducers (6) are arranged on that surface of the substrate (22) which is remote from the measurement medium and the cleaning transducers (24) are arranged on the opposite surface - wetted by the measurement medium - of the substrate (22).

8. Device according to Claim 7, **characterized in that** at least the cleaning transducers (20; 24) are provided with an adhesion-reducing layer (25) for the measurement medium.

9. Device according to any of Claims 4 to 8, **characterized in that**
the cleaning transducers (20; 24) are divided into a number of smaller transducers for impedance matching.

10. Device according to any of the preceding claims, **characterized in that**
at least one temperature sensor composed of the same material as the sensor and cleaning transducers (6, 20; 24) is arranged on the substrate (5; 22) on the side facing the measurement medium.

## Revendications

1. Procédé de gestion d'un dispositif de capteur micro-acoustique selon lequel
- à l'aide d'au moins un convertisseur électro-acoustique (5) on génère dans des éléments de base de capteur, des ondes de surface, acoustiques avec des modes d'ondes prédéfinis et on les détecte et à partir de leur comportement en extension, le long d'un chemin d'extension, on détermine une mesure des propriétés physiques d'un milieu de mesure,
**caractérisé en ce qu'**
en plus on a au moins un convertisseur de nettoyage électro-acoustique (20, 24) et
on génère une onde de surface à polarisation sagittale de façon à produire un nettoyage dans la région de la surface de l'élément de base de capteur, là où se trouve le milieu de mesure.

2. Procédé selon la revendication 1,
**caractérisé en ce qu'**
on utilise l'onde de surface à polarisation sagittale pour nettoyer la surface mouillée par le milieu de mesure en l'utilisant dans un procédé de nettoyage particulier.

3. Procédé selon la revendication 1,
**caractérisé en ce qu'**
on utilise l'onde de surface à polarisation sagittale pour nettoyer la surface mouillée par le milieu de mesure pendant le fonctionnement du dispositif de capteur.

4. Dispositif pour la mise en oeuvre du procédé selon l'une des revendications précédentes, selon lequel des convertisseurs électro-acoustiques sont formés de transducteurs interdigités (6) installés sur un substrat (5), ces transducteurs ayant des doigts (7) et des capteurs convertisseurs (6) sont prévus comme convertisseurs électro-acoustiques pour effectuer les mesures,
**caractérisé en ce que**
dans ou sur le chemin d'extension des capteurs convertisseurs (6), il y a au moins un convertisseur de nettoyage (20, 24) dont les modes d'ondes à polarisation sagittale se déploient par rapport à un premier chemin d'extension en étant tournés d'un angle de 90° ou dans un autre angle correspondant à la direction d'extension des modes d'ondes, de façon à produire un nettoyage.

5. Dispositif selon la revendication 4,
**caractérisé en ce que**
les convertisseurs de nettoyage (20) sont prévus des deux côtés du chemin d'extension passant entre les capteurs convertisseurs (6).

6. Dispositif selon la revendication 4,
**caractérisé en ce qu'**
un ou plusieurs convertisseurs de nettoyage (20) sont prévus dans le chemin d'extension fonctionnant comme chemin de temporisation entre les capteurs convertisseurs (6).

7. Dispositif selon l'une des revendications 4 à 6,
**caractérisé en ce que**
le substrat (22) fait partie d'un capteur SH-APM,
les capteurs convertisseurs (6) sont prévus sur la surface du substrat (22) à l'opposé du milieu de mesure et les convertisseurs de nettoyage (24) sont prévus sur la surface opposée du substrat (22), surface mouillée par le milieu de mesure.

8. Dispositif selon la revendication 7,
**caractérisé en ce qu'**
au moins les convertisseurs de nettoyage (20, 24) sont munis d'une couche (25) réduisant l'accrochage du milieu de mesure.

9. Dispositif selon l'une des revendications 4 à 8,
**caractérisé en ce que**
- les convertisseurs de nettoyage (20 ; 24) sont répartis en un nombre de convertisseurs plus petits pour adapter l'impédance.

10. Dispositif selon l'une des revendications précédentes,
**caractérisé par**
au moins un capteur de température dans la même matière que les capteurs convertisseurs et les convertisseurs de nettoyage (6, 20 ; 24), sur le substrat (5 ; 22) sur le côté tourné vers le milieu de mesure.
